Europäisches Patentamt

European Patent Office

Office européen des brevets

(11) Publication number: **0 370 929**
**A2**

## (12) EUROPEAN PATENT APPLICATION

(21) Application number: 89420462.7

(51) Int. Cl.5: **G06F 11/22**

(22) Date of filing: **22.11.89**

(30) Priority: **23.11.88 US 275495**

(43) Date of publication of application:
**30.05.90 Bulletin 90/22**

(84) Designated Contracting States:
**DE FR GB**

(71) Applicant: **JOHN FLUKE MFG. CO., INC.**
**6920 Seaway Boulevard**
**Everett Washington 98203(US)**

(72) Inventor: **Polstra, John D.**
**4522 SW Andover Street**
**Seattle Washington 98116(US)**
Inventor: **White, Bruce T.**
**19903 164th NE**
**Woodinville Washington 98072(US)**
Inventor: **Scott, Marshall H.**
**19007 181 Street**
**Woodinville Washington 98072(US)**

(74) Representative: **de Beaumont, Michel**
**1bis, rue Champollion**
**F-38000 Grenoble(FR)**

(54) **Kernel testing interface and method for automating diagnostics of microprocessor-based systems.**

(57) An improved testing apparatus and method for testing the kernel of a microprocessor based unit under test (UUT) where connection to the UUT is made at both the memory connection socket and at the microprocessor with the microprocessor being in place and active in the UUT. The apparatus and method permits subtantially full diagnostics of the kernel to be carried out in a systematic and automated manner in which the requirement of manual probing of the UUT is minimized. Connections at the microprocessor permit the development of high resolution sync signals for verification and evaluation of test results and permit testing without latching of signals on the data bus. The testing protocol implemented in the method includes the use of testing primitives which permit the development of a signature for each address and data bus line for the identification of the type as well as the location of any faults discovered by the apparatus. The method of testing exploits bootstrapping techniques including three primitives for bus test, data stimulus and address stimulus to optimize simultaneous testing and circuit fault diagnosis.

EP 0 370 929 A2

# KERNEL TESTING INTERFACE AND METHOD FOR AUTOMATING DIAGNOSTICS OF MICROPROCESSOR-BASED SYSTEMS

## Cross-reference to Related Applications

This application is related to concurrently filed applications entitled HARDWARE ENHANCEMENTS FOR IMPROVED PERFORMANCE OF MEMORY EMULATION METHOD by T. Locke and AUTOMATIC VERIFICATION OF KERNEL CIRCUITRY BASED ON ANALYSIS OF MEMORY ACCESSES by J. Polstra, and APPARATUS, METHOD AND DATA STRUCTURE FOR VALIDATION OF KERNEL DATA BUS by White, J. Polstra and C. Johnson, all assigned to the assignee of the present invention.

## Technical Field

The present invention relates generally to the testing and troubleshooting of microprocessor-based electronic systems and more particularly to testing and troubleshooting of the kernel of microprocessor-based electronic systems using memory emulation techniques.

## Background of the Invention

With the wide use of complex microprocessor-based systems in both consumer and industrial products, automation of testing and diagnosis of circuit faults, particularly of the kernel of such systems, has become extremely desireable. The kernel of such a system is well-understood in the art to refer to the microprocessor ($\mu$P), itself, and the associated elements, specifically the memory, clock, address bus and data bus, with which it is necessary for the microprocessor to correctly interact in order to function properly. So-called emulative testers in which an element of the kernel is emulated by the testing apparatus have become popular for functional testing ·because they enable detailed diagnostics of the kernel even where the kernel is not even minimally operative.

One type of emulative tester is a microprocessor emulator, exemplified by the tester described in U. S. patent 4,455,654, issued to K. S. Bhaskar et al, commonly assigned, and hereby incorporated by reference herein. In that system, connection is made to the UUT by removing the UUT $\mu$P an connecting the test system through the $\mu$P socket of the UUT. The Bhaskar system operates in a bus-access mode wherein single cycles of bus accesses are made and acted upon before proceeding with another cycle. A bus access cycle places the test system $\mu$P into communication with the UUT bus to perform a read or write operation and then switches the test system $\mu$P over to the internal circuitry of the test system to generate another read or write command with a new address or to take appropriate action on data read from the memory of the UUT. In such systems, the bus switching required to effect single access cycles is becoming a limitation when applied to faster and more complex $\mu$Ps and the design of suitable bus switches is not trivial.

Another type of emulative tester is a ROM (or, more generally, memory) emulator wherein the system ROM is replaced by a emulation memory programmed to contain system test instructions and data. ROM emulation is deemed desireable since the ROM is in direct communication with the UUT data and address buses and the pin configurations of ROM sockets are relatively simple. ROM emulators are well known for use in software design and operational verification of the $\mu$P but have only recently been used for fault detection and diagnosis because no sync signal is typically available to synchronize the test equipment with the test results it receives. A solution to this problem is disclosed in U. S. Patent Application 07/158,223, of M.H. Scott et al, filed February 19, 1988, for MEMORY EMULATION METHOD AND SYSTEM FOR TESTING AND TROUBLESHOOTING MICROPROCESSOR-BASED ELECTRONIC SYSTEMS, assigned to the common assignee and hereby fully incorporated by reference herein. That test system comprises a $\mu$P-based mainframe and an interface pod which also includes a $\mu$P-based system which is connected to both the $\mu$P and the memory socket of the UUT. The interface pod includes special logic circuitry connected to the UUT $\mu$P to provide a fine resolution sync signal pulse during a bus cycle of interest in order to provide full troubleshooting fault isolation that is as effective as that provided by prior art $\mu$P emulation. This is because the high resolution sync pulse derived from the $\mu$P can be used to isolate and evaluate signals monitored from the address and data buses at the memory socket with the same facility as they could be from $\mu$P connections. The interface pod gains control of the microprocessor, which then executes instructions provided by the emulation memory connected to the UUT memory space. An analyzer RAM monitors the UUT memory connections for each bus cycle which is encoded using the UUT memory chip select line.

Also, as disclosed in that application, ROM emulation may be generalized to memory emulation (e.g. the emulation of any memory or portion of memory) since the trend in $\mu$P-based systems is to increase RAM while reducing ROM and possibly eliminating ROM altogether.

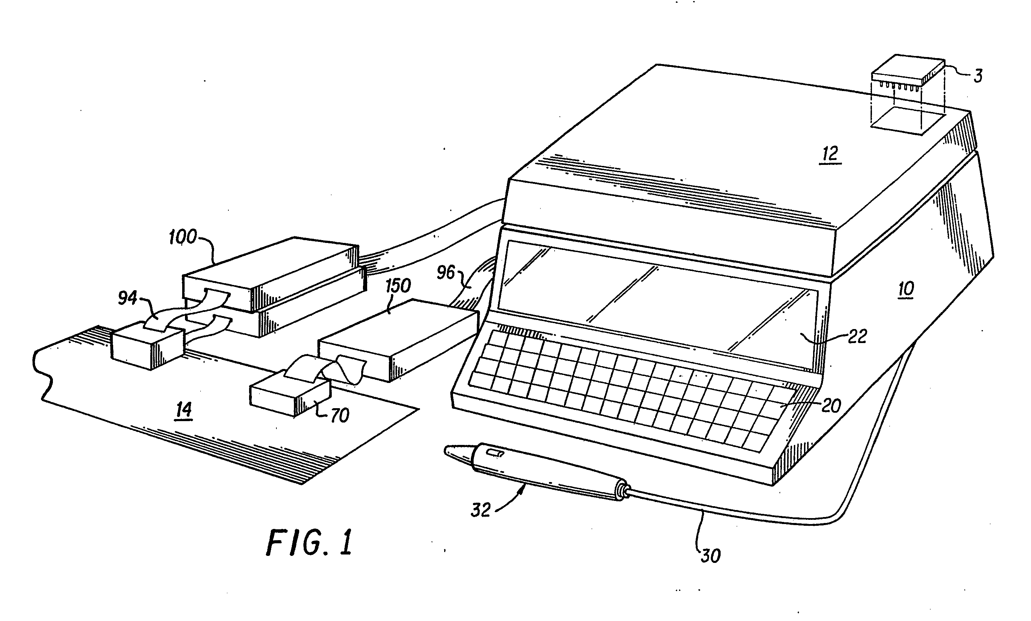

Although the details of the system described in the copending application are provided in detail therein and are, for brevity, not repeated here, an overview of that system is shown in figures 1 - 3.

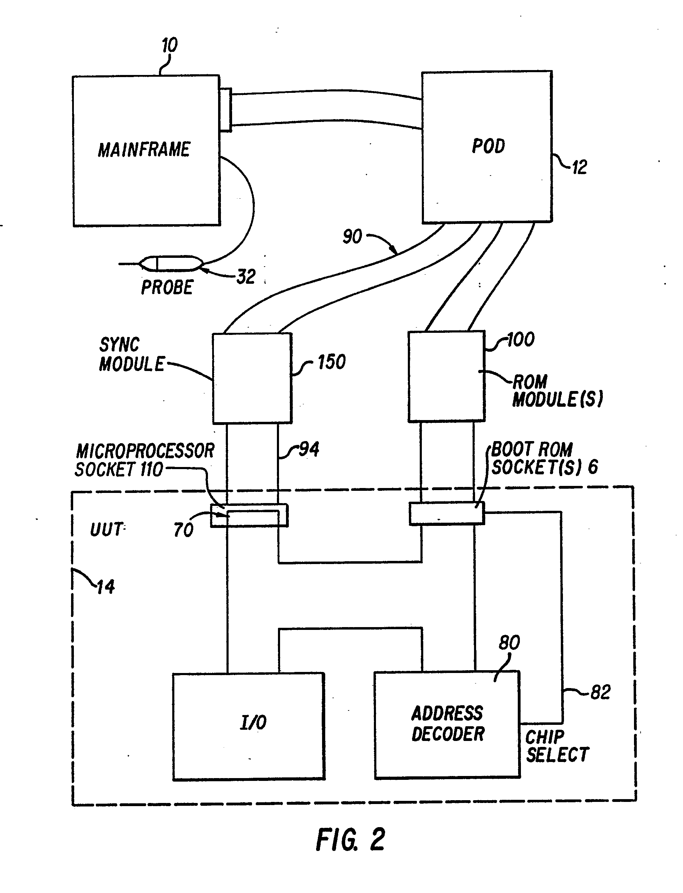

Figures 1 and 2 show the overall test system which includes a mainframe unit 10 of small size including a probe 32 and a keyboard 20 and display 22. Memory interface pod 12 is connected to the mainframe by a multi-conductor cable in a manner well known in the art. The pod preferably contains a personality module 3 which serves to configure the test apparatus for the type of processor used in the UUT. Multi-conductor cables also connect the pod to memory module 100 and sync module 150 which function principally as bidirectional repeaters to ensure reliable communication over the cables and also perform some logic and switching functions. The memory module may also provide a connection for the UUT memory so that when memory emulation testing is completed, the UUT may be operationally tested with its own memory 70 electrically in place. It will be understood that the physical configuration of the mainframe, pod and modules, while deemed preferable from the standpoint of operator convenience, is not essential to the invention and could, for example, be included within a common housing or be regrouped and distributed in a larger or smaller number of housings than illustrated.

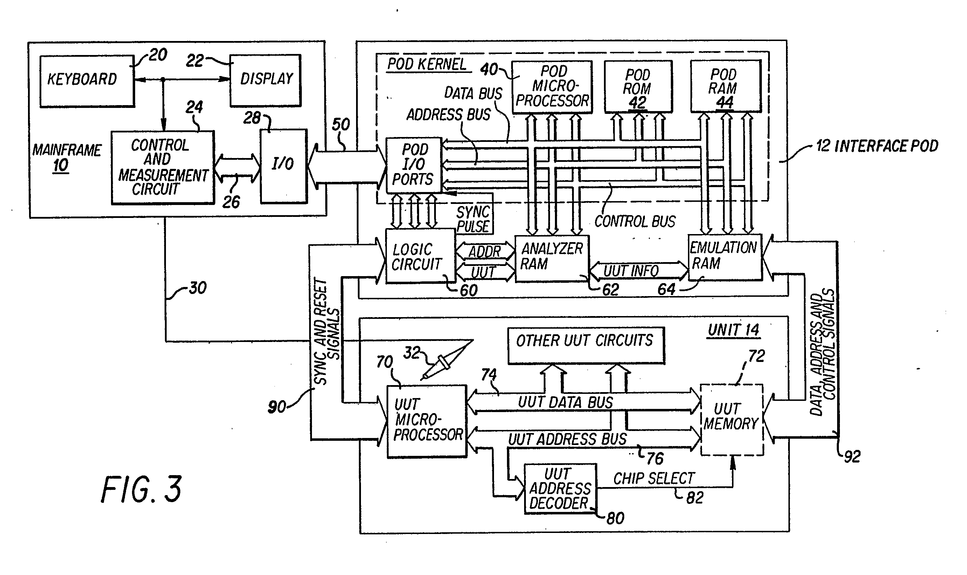

The following is a brief overview of the operation of the system of the copending application with particular reference to FIG. 3 which is a more detailed schematic diagram of the system shown in figure 2. An operator initiates a particular test of interest using the keyboard 20 and display 22, and control measurement circuits 24 generate instructions and commands which are passed through I/O 28, cable 50, and pod I/O 46 to the pod kernel. The pod $\mu$P 40 sets up the circuitry within the interface pod 12 to perform the desired test. Diagnostic instructions are placed in the emulation RAM 64, and reset control is passed through the I/O port 46 and over cable 90 to gain control of $\mu$P 70, which resets and then begins executing the instructions in emulation RAM 64. Analyzer RAM 62 monitors test results coming back over cable 92 and passes these results to the pod kernel which in turn transmits information back to the mainframe 10 via cable 50. If faults are detected, the operator may be prompted to place probe 32 on particular node within the UUT 14, and the sync pulse extracted from the UUT microprocessor 70 ensures that information read by the probe occurs at the appropriate time, i.e., within a bus cycle of interest.

One important aspect of the system of figures 1-3 is the use of the chip select line 82 to retrieve useful information from a Read operation performed on a UUT ROM at memory space 72. In this test method, UUT $\mu$P 70 is reset, and begins executing instructions presented to memory space 72 by emulation RAM 64. As the UUT $\mu$P 70 executes a number of bus cycles, UUT address decoder 80 decodes the chip selection as a series of ones and zeros. The analyzer RAM 62 monitors the chip select pin at the memory 72 socket, and indicates faults if a chip select signal during a particular bus cycle is not the logic level expected. In this manner, test results can be passed back to the interface pod from a ROM socket.

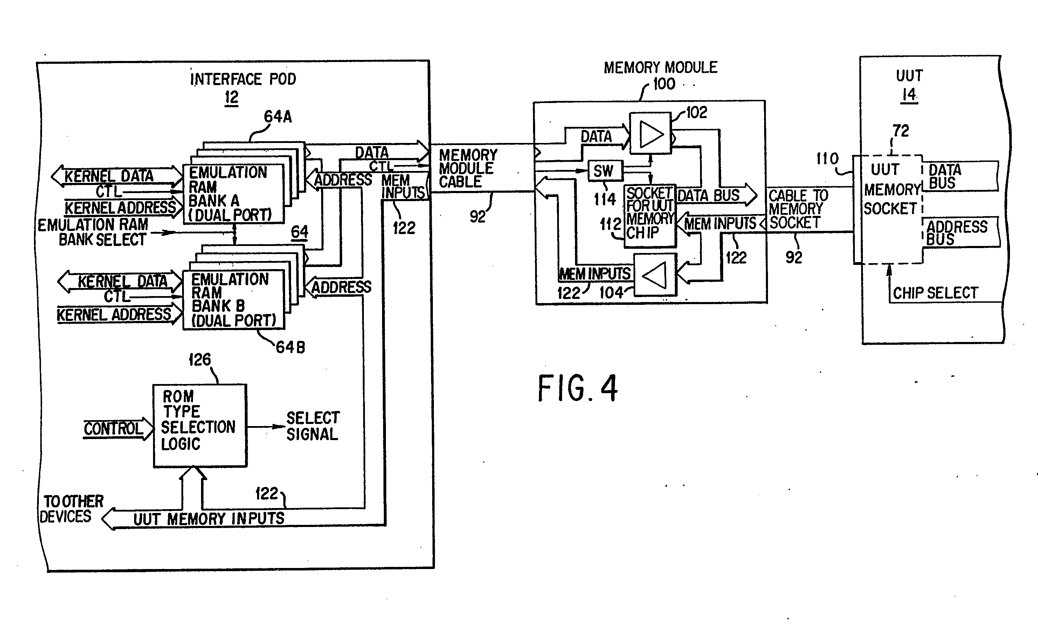

FIG. 4 shows in closer detail the interconnection between emulation RAM 64 and UUT memory 72. In particular, because the cable 92 may be quite long, a memory module 100 may be provided to condition the signals to ensure proper operation. Of course, if cable 92 is very short, then the memory module 100 is not needed.

Included in the memory module 100 are buffers 102 and 104 interposed in the signal paths. The end of cable 92 includes a connector 110 for connecting directly into a UUT memory socket, and the ROM module 100 may include a socket 112 to receive the UUT memory. In such a configuration, an operator can select between instructions from the interface pod 12, that is, from emulation RAM 64, or from the UUT memory in socket 112. Accordingly, a switch 114 may be provided to enable either the data buffer 102 or the memory socket 112 while disabling the other. In situations where the UUT memory being emulated is the boot ROM, depending upon the width of the UUT bus, there may be several UUT boot ROMs, requiring several connectors 110 and several memory modules 100. As a practical matter, the present invention provides sufficient flexibility to accommodate almost any UUT memory configuration.

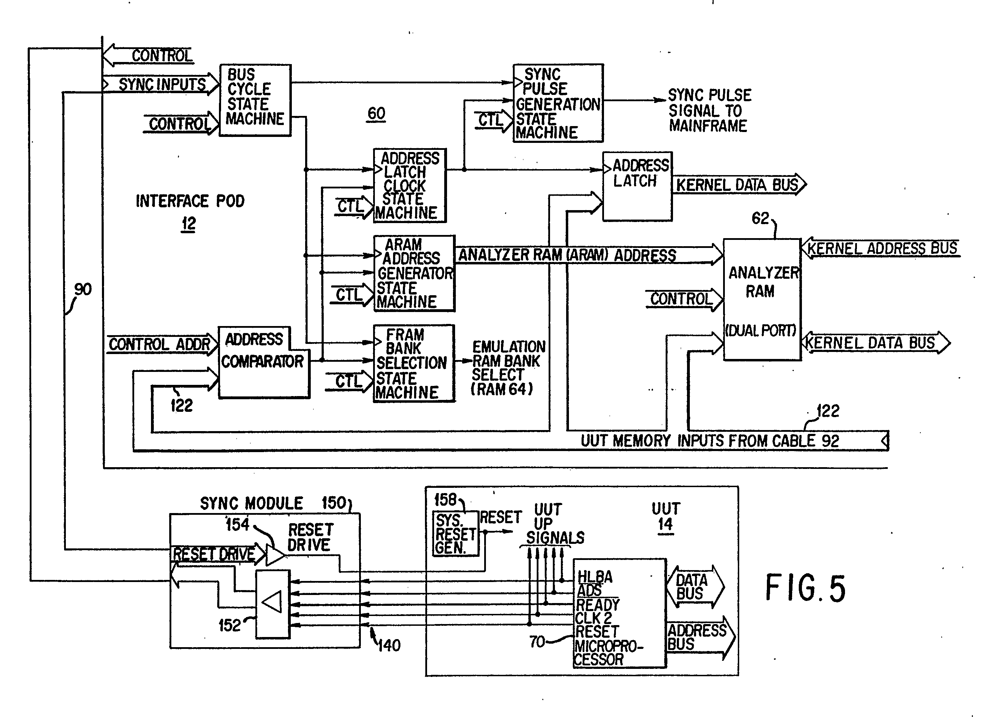

One important feature of this test apparatus is to provide two banks of emulation RAM represented by emulation RAM banks 64A ad 64B. To ensure that the UUT remains alive during functional testing, one bank of emulation RAM is always presented to the UUT uP 70 during the test. Therefore, the interface pod kernel can be loading $\mu$P instructions into one of the banks while the other is switched over to the UUT memory space and the UUT, $\mu$P 70 is executing instructions from that other bank. At the appropriate time, the banks can be switched in such a manner that UUT microprocessor 70 is unaware that the instructions being executed are coming from another emulation RAM. The emulation bank select signals are produced by logic circuit 70, and will be discussed in connection with FIG. 5.

Data from the emulation RAM banks 64A and 64B pass over a data bus and through buffer 102 to the memory socket. Information from the UUT memory socket in the form of UUT memory inputs is fed back over a bus 122 and through buffer 104 in the memory module 100 to the interface pod 112, and as will be seen later, these UUT memory inputs will be used by the analyzer RAM 62 and by the logic circuit 60. Referring again to figure 2, a ROM type-selection logic circuit 126 is connected to the UUT memory inputs bus, which, if UUT memory 72 is a ROM, generates a signal to ensure proper pin information being matched with the interface pod 12. That is, while the physical JEDEC pin configurations may be the same from ROM to ROM, the electrical connections may be different (in other locations) from ROM to ROM. The pod kernel tells the logic circuit 126 what type of ROM, is to be emulated.

While the system of the copending application enables full diagnostics and provides a high degree of automatic testing, the operator is often required to probe the UUT to realize the full diagnostic capability of that system. This required probing is time consuming and requires a higher degree of skill of the operator of the testing apparatus. That arrangement and test procedure also does not adequately allow for marginal levels of operability of the UUT $\mu$P and does not fully exploit the diagnostic benefits that can be derived from "bootstrapping", wherein testing is begun with the simplest functions and proceeds through a sufficient number of increasingly complex functions until full functional integrity of all circuits can be deduced or faults fully diagnosed.

It is, accordingly, a principal object of this invention to provide a higher degree of automation of the testing of $\mu$P-based systems than has previously been available.

It is a further object of this invention to provide a system in which the amount of required probing of the UUT is minimized.

It is another object of this invention to provide full diagnostics and fault isolation of all kernel structure by memory emulation.

Disclosure of the Invention

The present invention is directed to a test procedure for use in testing apparatus for testing $\mu$P-based systems and devices. More particularly, the present invention is a hardware implemented procedure exploiting bootstrapping, and moreover, using the simplest available structure and minimum number of signals for error detection. The test procedure of this invention, when implemented in a system similar to the memory emulation system of the copending Scott et al application, also provides kernel diagnosis capability at low operational levels of the $\mu$P and inoperative kernels.

This invention includes method for testing the kernel of a microprocessor-based unit under test (UUT) having a microprocessor ($\mu$P), memory and data and address buses comprising the steps of placing at least one load instruction into an emulation memory electrically substituted for the memory of said UUT, initiating reset of the UUT $\mu$P, executing the load instruction to place a predetermined bit pattern on a portion of the address bus, detecting a bit pattern on a portion of the address bus and evaluating the bit pattern on the address bus to detect an error in the performance of the load instruction.

The invention includes a bus test primitive includes the characteristic steps of placing at least one load instruction into an emulation memory electrically substituted (e.g. physically replaced or connected in parallel with power disconnected from the UUT memory) for the memory of a UUT, initiating reset of the UUT $\mu$P, executing the load instruction to place a predetermined bit pattern on a portion of the address bus, detecting a bit pattern on a portion of the address bus and evaluating the bit pattern on the address bus to detect an error in the performance of the load instruction.

The invention further includes a data stimulus primitive includes the characteristic steps of loading one of a sequence of bit patterns into a location of an emulation memory which has been electrically substituted for the UUT memory, initiating reset of the UUT $\mu$P, generating a sync signal responsive to the reset of the $\mu$P, detecting a bit pattern on the data bus and/or a bit on the chip select line in accordance with the sync pulse and analyzing the pattern of signals on ones of the data bus lines and/or the chip select line caused by the sequence of bit patterns upon repeated reset of the $\mu$P to verify or diagnose the functionality of lines of the data bus.

The invention include the further feature of an address stimulus primitive is characterized by the steps of loading a small program or selected bit pattern into an emulation memory which has been electrically substituted for the memory of a UUT, resetting the $\mu$P to cause execution of the program, detecting a bit pattern on the address bus and evaluating the bit pattern on the address bus relative to the selected bit pattern to diagnose faults in the respective lines of the data bus.

The above and other objects of the invention will be evident to one skilled in the art in view of the following detailed description of the invention and the accompanying drawings.

Brief Description of the Drawings

Figure 1 is an illustration of the testing apparatus disclosed in the copending application of Scott et al, supra, to which this invention is applied.

Figure 2 is a simplified block diagram of the invention.

Figure 3 is a detailed block diagram of the overall system as shown in figure 2.

Figures 4 and 5 are a detailed illustration of the internal organization of the pod, memory module and sync module.

Figure 6 is a diagram of the bootstrapped testing hierarchy implemented in the present invention.

Figure 7 is an illustration of the relationship of Stimulus primitives and the signatures used for bus diagnosis.

Figure 8 is a flow diagram of the Bus test primitive used in this invention.

Figure 9 is a flow digram of the Data Stimulus primitive used in this invention.

Figure 10 is a flow diagram of the Address Stimulus primitive used in this invention.

Figure 11 is a flow diagram of the Complemented Address Stimulus primitive used in this invention.

Figure 12 is a flow diagram of the probed bus line testing procedure used in this invention.

Figure 13 is a flow diagram of the non-probing test for latched and tied bus lines used in this invention.

Figure 14 is a flow diagram of the probed bus line diagnosis routine used in this invention.

Figure 15 is a flow diagram of the non-probed bus line diagnosis routine used in this invention.

Figure 16 illustrates an implementation of the Address Stimulus primitive for vectored reset processors.

Figure 17 illustrates an implementation of the Address Stimulus primitive for execute-on-reset processors.

This invention, as implemented in a memory emulation testing apparatus, particularly of the type disclosed in the copending Scott et al application, includes a plurality of novel procedures including a bus test primitive, a data stimulus primitive and an address stimulus primitive, which will be individually summarized below. Each of these primitives has utility for testing a particular portion of the kernel of a $\mu$P-based system and when utilized in a sequence according to the invention permit a higher degree of automated testing and diagnostics at high speed and with operator convenience.

The bus test primitive is executed by a program in the mainframe of the test apparatus. The main function of the bus test primitive is to determine, if the $\mu$P is able to perform basic read and write operations in the kernel and can consist of as little as a single read and write. If successful, it will be known that the $\mu$P is at least capable of accessing the memory, in this case, the emulation memory, receiving a bit pattern over the data bus and placing that bit pattern on the address bus where it can be received and monitored by the pod. Since the testing apparatus performs diagnostics of the data and address buses by the development of signatures, however, in the preferred embodiment, the bus test primitive is implemented as a program which is designed to exercise the portion of the data and address buses which correspond to the boot memory. Whether implemented as a single operation or a sequence of operations, it is significant that the bus test primitive is not exhaustive of the lines comprising the data and address buses or even of the combinations of bits which can be placed on those lines or portion of those lines and can thus function rapidly as a go/no go test. By verifying, rather than fully testing, the functionality of a group of bus lines, other primitives and the reporting of results and the obtaining of results from the chip select line are facilitated, in keeping with the noted bootstrapping technique wherein the procedure is performed upon and monitored from the smallest portion of operational sructure which has been tested or verified at that point in the test procedure. It is important from the user's point of view that no probing is required for the bus test.

The data stimulus primitive is implemented at a lower level of operability of the $\mu$P than the bus test primitive, specifically by repeatedly resetting the $\mu$P; which function will have been tested prior to execution of the bus test primitive. Upon reset, the $\mu$P accesses the first location in the boot memory and retrieves the bit pattern stored there. The data stimulus is no a program but is executed by altering the bit pattern in the first location of the boot memory for each reset. It is significant to note that this function is common to both so-called vectored reset and execute-on- reset types of microprocessors. With either type of $\mu$P, the bit pattern retrieved from memory will be communicated over the data bus and will appear on the address

5

bus.

During reset, a sync pulse is generated by the µP during the initial reading of the first location of the boot memory which is captured by the sync module, communicated to the pod and used to to evaluate signals appearing on the data bus, either by probing to collect data bus line signatures, or, preferably by verification of the data bus rather than testing. This is done by a procedure similar to the bus test using an exhaustive data stimulus sequence of bit patterns while monitoring the chip select line. The data stimulus sequence is exhaustive in the sense that it consists of a series of essentially arbitrary patterns which are, nevertheless, chosen such that a unique signature will be generated on each line of the data bus. As noted in the description of the bus test primitive, done on the memory bootspace, the chip select line (which is a logic function of the high-order bits on the address bus) will reflect an error only if one or more of the high-order bits is non-zero as is expected when cycling through boot space locations and the go/no go test will be passed even if one or more of the high order bus lines are tied to ground. In the same way, the presence or absence of a chip select signal as expected while performing the data stimulus sequence will reflect whether or not one of the high order lines is latched (e.g. shorted to ground). If this test is passed, only tied line defects, where a line of the data bus is tied to another data bus line, will remain. This can be later diagnosed by probing or, preferably by automatic diagnosis after address bus testing, which has been made possible by verification of the data bus.

After verification of the data bus, testing of the address bus may be conducted using the same stimulus sequence as for the data stimulus primitive. However, this is done by conducting a programmed sequence of read/write instructions using these bit patterns and collecting signatures either with a probe, or preferably, in an analysis memory from which latched or tied lines may be deduced. As pointed out above, an exhaustive test of the address lines may be conducted using only the limited number of bit patterns in the stimulus sequence. Once the address bus lines have thus been fully diagnosed, full diagnosis of the data lines will be possible since any defect appearing on the databus lines will also be reflected on the address bus lines. Since the address bus lines have been fully diagnosed, any fault noted will be isolated to a particular bus. It is helpful to note that for execute-on-reset processors, the program for performing the address stimulus primitive can be a single instruction. For vectored reset processors, which look to the boot location address for the address of the first instruction, the address stimulus primitive typically requires no instructions at all; the desired bit pattern is merely placed into the emulation memory at the reset vector location.

To recapitulate the above summarized primitives in the context of the overall system and method, when it is desired to perform a test of the kernel of a µP-based system, an emulation memory is electrically substituted for the memory of the unit to be tested and a sync module is connected to timing information and forcing pins, such as the reset pin, of the µP by leads 140. When the test procedure is initiated, certain checks are made to ascertain that power is provided to elements of the kernel as will be enumerated in greater detail below. Then a reset overdrive check is performed to determine if the pod can, in fact, initiate a reset of the µP and is monitored by the sync module to determine if the reset line first goes active and then inactive. Actual reset of the µP is not checked in this step but only that a signal which should be capable of doing so is present at the appropriate pin of the µP. Next, the sync module captures the clock signal of the µP which is evaluated. If the µP clock signal is not received by the pod, additional checks are made of the clock to determine if it is slow or shorted and for unexpected values of the signals on the forcing lines.

At this point, no tests have been performed on the µP itself but signals have been verified sufficiently to determine that such tests may now be done. The most rudimentary of these tests, the µP reset, is now done by overdriving the reset line and looking for a chip select signal on the chip select line corresponding to the boot memory location from address decoder 80. If successful, the µP will again be reset for the purpose of checking for the correct signal on the low order lines of the address bus to access the first location of the boot memory. This procedure will now have verified sufficient functionality of the kernel to proceed with the sequence of the bus test, and the sequence of data and address stimulus primitives as outlined above. It should be noted also that if any test conducted thus far has indicated a defect, a particular kernel fault will have been unambiguously indicated without requiring any more complex or high level function from the µP than reset. The bus test as outlined above, in its first (and possibly only) cycle will verify the only further function necessary to fully test and diagnose the remainder of the kernel: a read and write operation. It should also be kept in mind that because of the high resolution sync pulses produced by the sync module, bus cycles of interest can be isolated and evaluations of the buses can be conducted according to the signatures produced in response to the stimulus paterns imposed to exercise the lines. Since, for example, only twelve bit patterns, as exemplified below, are necessary in a stimulus primitive in order to exercise thirty-two lines in a bus develop a unique signature for each line for full diagnosis the bus, significant increases in testing speed can be achieved.

In summary of the overall system and method, an emulation memory is electrically substituted for the memory of the UUT, and the ability of the test apparatus to force a reset of the $\mu$P is checked, then its ability to access the first location of the boot memory is determined. The bus test, as outlined above is then conducted to test read and write operationsof the $\mu$P and then to conduct a go/no go test on the low order bits of the data and address buses. Next, testing of the data bus lines can be conducted, but preferably mere verification of the databus lines is done in preparation fof testing and diagnosis of the address bus, after which full diagnosis of the data bus lines, if not already done, may then be automatically conducted by the pod.

Best Mode of practicing the Invention

Overview

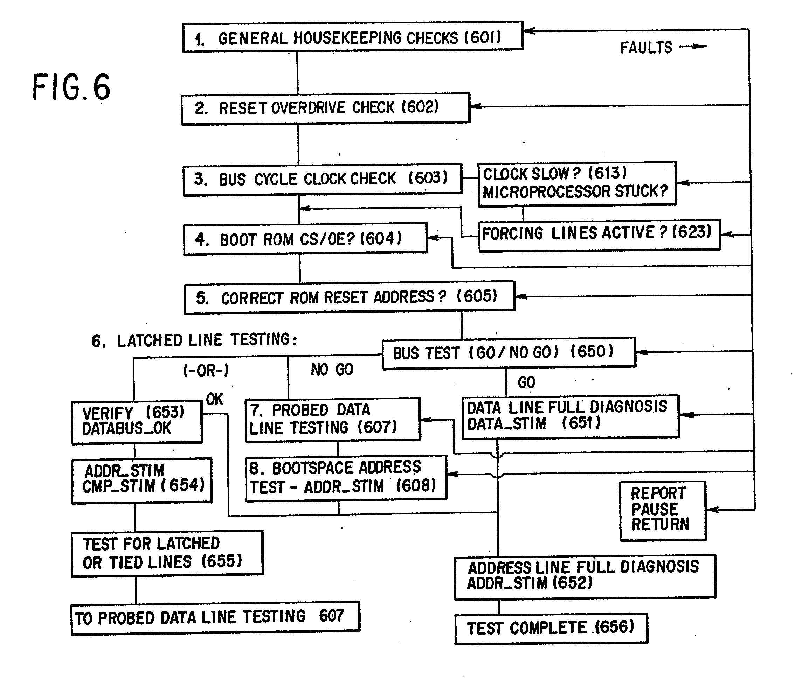

Having generally described and summarized the major features of the invention above, the bootstrapped test hierarchy will be considered in greater detail with reference to figure 6. First, general housekeeping checks 601 are conducted. These checks include basic verification of connections for power and the pod, specifically:

Is the pod plugged in?

Is the UUT powered up?

Is there power to memory modules?

Is continuity provided by the ground fuses?

Since the ability for the POD to initiate reset of the $\mu$P is basic to all test procedures and is the most basic of $\mu$P operations as well, the next test, Reset Overdrive Check 602, is performed to determine if the pod can, in fact, cause the $\mu$P to reset by overdriving the $\mu$P reset line. This is done by monitoring the reset line at the UUT $\mu$P as noted above. If a signal has been provided to the $\mu$P which should cause a reset of the $\mu$P, a Bus Cycle Clock test 603 is performed. The bus cycle clock is an internal pod signal which allows the pod to track execution of the UUT. This signal is generated from the UUT signals detected by the sync module. If the a clock signal within the expected frequency and voltage tolerance is not detected, a check is made to determine if the UUT clock is slow, the UUT $\mu$P is stuck or the UUT $\mu$P is active as illustrated at 613 and 623 of figure 6. Next, a Boot ROM CS/OE (chip select/output enable check 605 is made to determine if a chip select signal was received corresponding to the boot ROM address and to enable output thereof after reset. The above steps verify that the pod can conduct a test procedure and, as indicated above, requires no more functionality of the UUT than the ability to perform a reset of the $\mu$P.

Next, a go/no go bus test 650 is performed in a manner to be described below. This bus test involves the more complex, but still rudimentary, function of performing a read and a write operation. From the standpoint of the pod, this test is to determine whether or not the UUT $\mu$P is capable of transferring a signal from the data bus to the address bus. This is not an exhaustive test and, in fact, an exhaustive test cannot be done at this point since a fault could occur in the $\mu$P or either of the data and address buses and, hence could not be diagnosed. Also, for memory emulation testers which derive signals from the address bus, the $\mu$P must be able to read a signal from at least one address of the emulation memory and place that signal on the address bus where it can be evaluated. If the bus test is passed, this function can be used to fully test the data bus 651 by performing a sequence of resets while placing elements of the data stimulus primitive in the boot address or other addresses where read and write operations can be performed as determined by the bus test. In the alternative, the data bus may be merely verified (653) as sufficiently functional to enable performance of the address bus diagnosis since fewer functional data lines may be used to call bit patterns from the emulation memory to diagnose the address bus. Once the data bus has been diagnosed or verified, the Address Stimulus primitive can be run to fully diagnose the address bus as shown at 652. If the the data stimulus test is not passed, the sequence of probed data line testing 607 and bootspace address line testing 608 using the Address Stimulus primitive can be performed. If verification of the dat bus is successful, the procedure may continue with a full diagnosis of the address bus since any fault then found will be on one of the address bus or the data bus and can be specifically attributed to one of them by simple analysis of signatures obtained from the Address Stimulus primitive. If the data bus verification is not successful a test for latched data lines 654, 655 is performed, followed by tests 607 and 608. It is to be noted that no probing will be required at any point in the complete diagnosis of the UUT kernel unless the data bus cannot be verified; which degree of automation of the testing is a very significant improvement over other testing arrangements and devices.

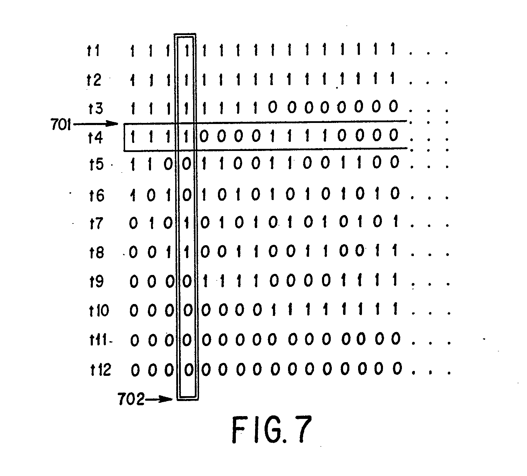

Referring now to Figure 7, the concept of signatures will be explained. When a Stimulus primitive is performed, an arbitrary pattern of bits is placed on one of the buses in parallel. this pattern for another, if there is a fault) will be sensed by the pod and stored in the analyzer RAM 62 shown in figures 3 and 5. Figure 7 schematically shows storage of the first sixteen bits of these patterns in the analyzer RAM 62. For example, the pattern stored during the fourth step of the primitive is shown at 701 corresponding to time $t_4$. The signature of a given line of a bus will be in a vertical column such as at 702 for the fourth bit line of the bus. Therefore, it is seen that the signature is the function of states the line assumes over a period of time while the primitive is being performed and will be unique for each line of the bus, if good. The power of using signatures for diagnosis is that the principal faults anticipated are of lines of the bus stuck high or low, in which case, the signature will consist of all ones or all zeros, or tied to another bus line, in which case, at least portions of the signature will match the signature of the line to which it is tied. In either case, the comparison necessary to fully identify a fault is extremely simple and can be executed rapidly and without the necessity of isolation of memory cycles or pausing for analysis between memory operations. Signatures can also be collected for single bus lines using a probe.

With the concepts illustrated in Figures 6 and 7 in mind, the operation of the invention will now be considered in more detail. Hereafter, special addresses are referred to symbolically by names in upper-case. The corresponding numeric addresses are listed in Table 1.

## Detailed Description

Each respective one of the bus test, data stimulus and address stimulus primitives is invoked by executing a Run UUT at a special address. This causes the pod to begin executing the appropriate kernel testing primitive associated with that special address. Run UUT is used to invoke the primitives because its implementation permits the primitives to consume a large amount of time without causing a mainframe timeout since the placement of the sequence of the bit patterns in the emulation memory is done under control of the mainframe.

When a kernel testing primitive invoked by Run UUT is completed, the pod signals a Breakpoint Reached fault to the mainframe. This indicates to the mainframe that the primitive is finished executing. The mainframe can then read status information and results from various special addresses.

## The Bus Test Primitive

The Bus Test primitive performs a basic go/no-go test of the UUT kernel. Its most important attribute from the user's point of view is that no probing is required. As pointed out above, this means that Bus Test can be run without user interaction or intervention. The bus test primitive does not exhaustively test the entire UUT kernel; doing so would require probing. However, the bus test primitive does enable the testing of those portions of the kernel which must work correctly in order to perform UUT accesses such as reads and writes. The bus test primitive is not exhaustive and could simply be a single read and write instruction but preferably, the extent of the bus test primitive will correspond to the size of the boot memory or ROM.

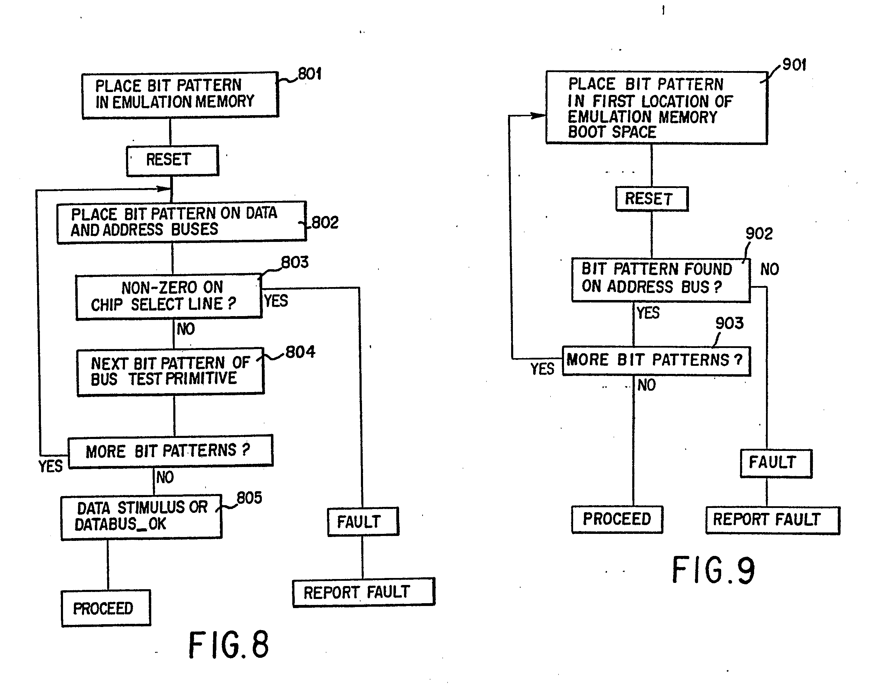

Basically, as illustrated in figure 8, the bus test primitive puts arbitrary patterns of "1's" and "0's" from the emulation memory at 801 on the data and address buses 802 in view of the fact that at least a part of each of the data and address buses must be good in order to perform read and write operations. For example, assume a 32 bit processor and a boot ROM of 2K bytes located beginning at address 0. This 2K byte area of memory can be accessed fully with the low order 11 address lines. The bus test primitive will be such as to fully exercise these lines; the high order chip select line being monitored for a non-zero condition which is a logic function of the remaining 21 address lines. All higher order address lines must remain at zero (even if tied to ground) for the bus test to succeed. The bus test primitive can, theoretically, provide testing of all data lines but in certain implementations, the boot memory may, in fact, cover only, say, 16 data lines. Therefore, the bus test primitive actually tests only those data lines connected to the boot memory. Assuming that the microprocessor-specific code is properly designed and implemented, it is inferred that if Bus Test passes, then UUT reads and writes will be possible. Such reads and writes can then be used for more fully testing the kernel.

If the bus test, conducted in accordance with the bus test primitive, reports a fault, it often does not provide much diagnostic information. Detailed diagnostics have heretofore often simply not been obtainable without probing. That is why the bus test is termed a go/no-go test. After a kernel fault has been detected by the bus test, its cause can be diagnosed using the probe with the data stimulus primitives or preferably with techniques using stimulus primitives described below.

Stimulus Primitives

The three stimulus primitives (including the Complemented Address Stimulus, described below) used in the invention differ from the bus test primitive since they do not directly test any portion of the kernel. The stimulus primitives merely place essentially arbitrary patterns on the buses although the sequence of these patterns and the patterns themselves may preferably designed to minimize sequence length consistent with the possibility of obtaining signatures of sufficient length for full diagnosis. These patterns are monitored and stored to produce a unique signature for each line of the buses. These signatures may then be analyzed to isolate and identify bus line defects, particularly latched and tied lines.

The collection of signatures provides a distinct advantage over the prior art since analysis is performed only after a suitably exhaustive sequence of patterns has been applied and stimulus primitive patterns and sequences can be selected and organized such that simple and rapidly executable logic operations will completely characterize the nature and identity of any faults found. As noted above, analysis of signatures gathered under control of the sync module outputs obviate the need to isolate bus cycles on the address bus and the need to evaluate each sample as it is captured. The stimulus primitives used in the present invention are as follows:

Data Stim:

Because kernel testing must be occasionally performed when the kernel is not functional, it is important to have stimulus functions that do not depend on all of the kernel being up and running. As illustrated in Figure 9, Data_Stim forces an arbitrary data pattern from the emulation memory at 901 onto the data bus on the first access 902 after RESET. It requires only that the correct address be generated by the processor upon reset, and it will still be useful even if the data bus is flawed.

Addr Stim:

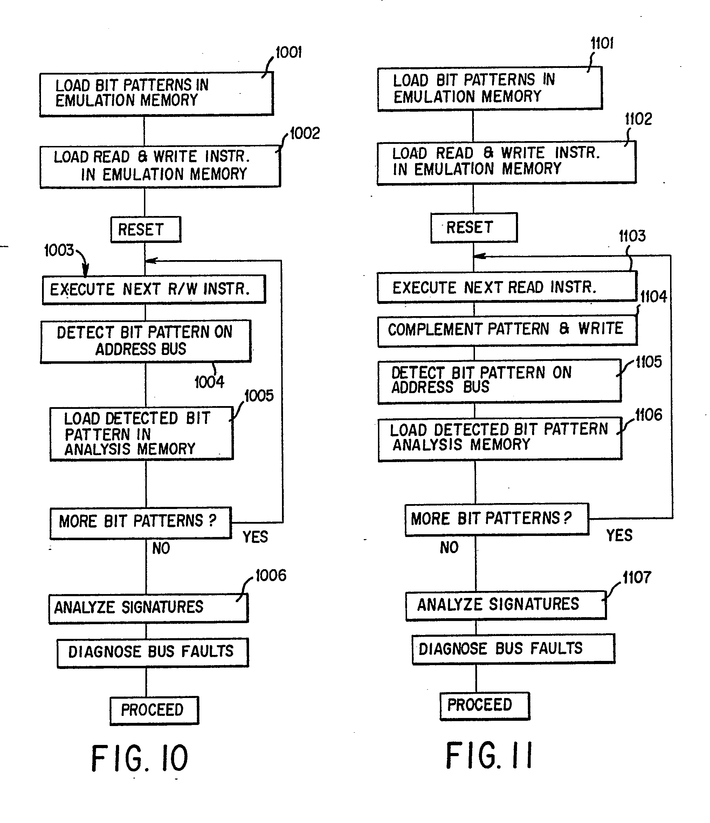

This stands for Address Stimulus. Addr_Stim causes the $\mu$P to put an arbitrary pattern on the address bus 1003. This requires that the data bus, and only two or three address lines be functioning. As illustrated in Figure 10, after RESET, the shortest possible sequence of instructions are executed 1003 that will force the $\mu$P to output the required address from emulation memory 1001, 1002 pattern. The address itself is passed as immediate data over the data bus.

Cmp Stim:

This stands for Complemented Address Stimulus. Like Addr_Stim, Cmp_Stim instead passes the complement of the desired address as an immediate operand, as illustrated in Figure 11. The processor then complements that value (1104), and outputs the specified address.

The Bus Test

Again with reference to Figure 8, the bus test and the manner of communication of the results to the operator will now be discussed in detail.

Bus Test is invoked by a Run UUT at the BUS-TEST special address 801. When the test is completed, the pod signals a Breakpoint Reached fault to the mainframe. The mainframe can then obtain the results of the test by reading from the STATUS special address. The STATUS special address and other special addresses to be referred to hereafter are given in table 1. A STATUS value of zero indicates that the Bus Test passed, and that UUT reads and writes should be possible. If the STATUS value is nonzero, it contains a set of error flags which are laid out as shown in Table 2. The error flags are described individually in the following paragraphs.

9

```
        Name              Address

      ACT_ADDR        02000000 00000094
      ACT_DATA        02000000 00000098
      ADDR_MASK       02000000 00000028
      ADDR_STIM       02000008 00000002
      BUS_TEST        02000008 00000000
      DATA_MASK       02000000 00000090
      DATA_STIM       02000008 00000001
      EXP_ADDR1       02000000 00000084
      EXP_ADDR2       02000000 00000088
      EXP_DATA        02000000 0000008C
      FORCE_LINE      02000000 0000002C
      POWER_MISC      02000000 00000018
      STATUS          02000000 00000014
```

## Special Addresses in Pod

## Table 1

```
   3   1 0 0 0 0 0 0 0 0 0 0
   1   0 9 8 7 6 5 4 3 2 1 0
  +-///-+-+-+-+-+-+-+-+-+-+-+
  | 0   | | | | | | | | | | |
  +-///-+-+-+-+-+-+-+-+-+-+-+
   \___/   | | | | | | | | | | |
     ^     | | | | | | | | | | Powerfail / Misc. Fault
           | | | | | | | | | Reset Failed
           | | | | | | | | Slow UUT Clock
           | | | | | | | Active Forcing Line
           | | | | | | Microprocessor Halted
           | | | | | ROM 1 CS/OE Fault
           | | | | Bad Reset Address
           | | | Bad Reset Data
           | | Kernel Fault 1
           | Kernel Fault 2
        Unused
```

## Status Register

## Table 2

Powerfail/Miscellaneous Fault

This bit is set if the pod detected a powerfail or miscellaneous fault during the Bus Test. Further details can be obtained by reading from the POWER-MISC special address. This address contains a mask indicating the specific powerfail miscellaneous faults which were sensed. The powerfail/ miscellaneous fault mask is laid out as shown in Table 3. Each nonzero bit in the mask represents a Powerfail or Miscellaneous fault detected by the pod. The bits are ordered such that they can be directly converted into a string of "O" and "1" characters for use as the "mask" argument of a TL/1 "fault pod__misc__fault" statement.

```
3   1 1 1 1 1 0 0 0 0 0 0 0 0 0 0
1   4 3 2 1 0 9 8 7 6 5 4 3 2 1 0
+-///-+-+-+-+-+-+-+-+-+-+-+-+-+-+-+
|  0  | | | | | | | | | | | | | | | |
+-///-+-+-+-+-+-+-+-+-+-+-+-+-+-+-+
 \_/  ^ ^ ^ ^ ^ ^ ^ ^ ^ ^ ^ ^ ^ ^ ^
  ^   | | | | | | | | | | | | | | ROM 1 Power Fault
  |   | | | | | | | | | | | | | ROM 2 Power Fault
  |   | | | | | | | | | | | | ROM 3 Power Fault
  |   | | | | | | | | | | | ROM 4 Power Fault
  |   | | | | | | | | | | ROM 1 Fuse Blown
  |   | | | | | | | | | ROM 2 Fuse Blown
  |   | | | | | | | | ROM 3 Fuse Blown
  |   | | | | | | | ROM 4 Fuse Blown
  |   | | | | | | Sync Module Fuse Blown
  |   | | | | | ROM 1 Not Present
  |   | | | | ROM 2 Not Present
  |   | | | ROM 3 Not Present
  |   | | ROM 4 Not Present
  |   | Personality Module Not Present
  Unused
```

### POWER_MISC Register

### Table 3

#### Reset Failed

This bit is set if the pod was unable to reset the UUT's microprocessor, Even though the pod applied a reset signal to the UUT, no reset was sensed at the microprocessor socket.

#### Slow UUT Clock

This bit is set if the UUT clock was sensed as being either stopped or unacceptably slow. The UUT clock is measured at the microprocessor's clock pin.

#### Active Forcing Line

This bit is set if one or more microprocessor forcing lines is asserted, preventing the processor from completing the test. More detailed information can be obtained by reading the FORCE__LINE special address, The contents of this address is a bit mask. Each bit of the mask corresponds to a forcing line, and the bits which are set indicate the forcing lines that were active. The ordering of the bits is such that they can be directly converted into a string of "0" and "1" characters for use as the "mask" argument of a TL/1 "fault pod__forcing__active" statement.

#### Microprocessor Halted

This bit indicates that the UUT microprocessor failed to produce a bus cycle clock, and thus apparently was halted. This bit is set only when the pod is configured for Sync Module generation of the bus cycle clock. It is never set if the pod uses ROM 1 CS/OE circuitry.,

ROM 1 Chip Select/Output Enable Fault

This bit indicates an apparent fault in the UUT circuitry which generates the Chip Select and Output Enable signals for ROM 1.

Bad Reset Address

This bit indicates that an incorrect address appeared at ROM 1 during the first bus cycle after the reset. The details can be obtained by reading the contents of three special addresses. ACT_ADDR contains the actual address that appeared on the bus, as measured at the ROM 1 socket. This address is laid out from the UUT microprocessor's point of view, with address line 0 in the least-significant bit. EXP_ADDR1 contains the address that was expected. ADDR_MASK is a mask with "1" in each of the bit positions corresponding to a valid bit in ACT_ADDR and EXP_ADDR1. Address bits that are zero in ADDR_MASK should be ignored, as they either do not exist or could not be measured by the pod.

Bad Reset Data

This bit indicates that incorrect data was sensed on the UUT data bus during the first bus cycle after the reset. The data is sensed at the $\mu$P socket, using the pod's Data Latch. The ACT_ADDR, EXP_ADDR1, and ADDR_MASK special addresses, described above, can be read for details of the address that was accessed. An additional three addresses, ACT_DATA and DATA_MASK, provide error information about the data lines in exactly the same way.

Kernel Fault 1 and 2

If either of these bits is set, then the pod detected an incorrect address at ROM 1 during some bus cycle subsequent to the reset cycle. This fault should be reported simply as a "Kernel Fault," and any further diagnosis will require the use of the other kernel testing primitives.

Data Stimulus

The Data Stimulus test is designed for stimulating and testing the microprocessor's data bus. This operation works by placing a user-specified pattern at the microprocessor's reset address in the ERAM 901, as shown in Figure 9. On command from the mainframe, the pod resets the UUT. The microprocessor begins "execution" in the normal way, by fetching from its reset address. The pod automatically generates a sync pulse during this initial fetch. The sync pulse can be used for probing the data bus to check that the desired pattern was actually fetched 902. Data Stimulus is performed by repeatedly resetting the $\mu$P while changing the pattern 903 stored in the reset address; thus requiring only a low level of operability of the $\mu$P.

The pattern placed at the reset address does not need to be a legitimate instruction for the $\mu$P. If it is not a valid instruction, the $\mu$P will most likely halt when it tries to execute the pattern. However, by that time the pattern already will have been fetched and stored into the mainframe's probe. The $\mu$P cannot possibly try to execute the initial pattern until it has fetched it and by the time that has happened, the pod has retrieved all the information that it needs.

The Data Stimulus feature can be used to gather signatures on the data bus lines by arming the probe, running Data Stimulus several times with different patterns, then performing a readout of the probe using one or more of the following procedures. At this point, if no fault has occurred, full diagnosis of the data and address busses is begun. At this point it is known that since the ROM reset address is correct, the routine Data_Stim is considered to be functional, and can be used to diagnose problems on the data bus.

Probed Data Line Testing:

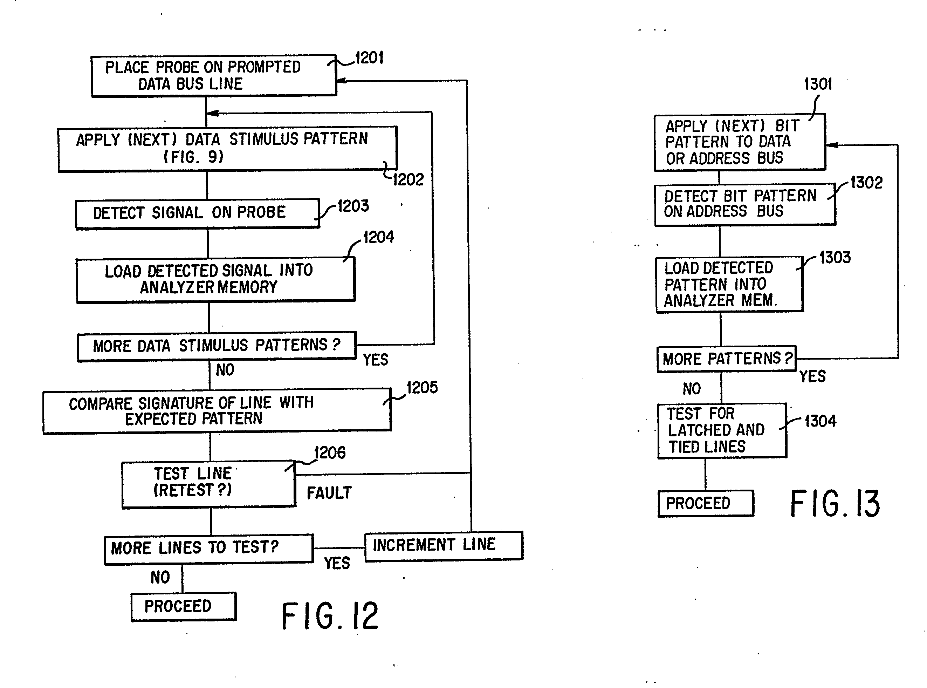

Again, Data__Stim is used to provide stimulus. But responses are gathered 1204 as cyclic redundancy check signatures (CRC's) by the single point probe 1203. As illustrated in Figure 12, the user is prompted 1201 to Probe a particular data line, and press the probe button. Once he does that, the stimulus begins 1202. On completion of the stimulus, the operator is instantly notified, by both audible and visual means, whether the line is good or bad. If good, the operator is then prompted for the next line to probe. If bad, the operator is, always prompted to reprobe 1206 the same line one additional time. This allows for an accidental misprobe. Only when a particular line is seen to be bad both times is a fault message issued. In addition to the prompts, the operator also has a designated key corresponding to the probe operation which allows him to specify the line to be probed. This is useful in the case where he might suspect the failing line. If the line that he enters does not find a fault, the probing algorithm takes over again, and prompts him to probe the next unprobed pin. It has been found that the audible "good/bad" indication is very important in allowing an operator to swiftly probe a board.

Bootspace Address Line Testing:

Once the above two tests have passed, the UUT data bus is known to be fully functional. This allows Addr__Stim to function. Repetitive invocations of Addr__Stim are used to provide stimulus, and the ARAM is used to receive the responses received at the ROM Module. With this stimulus/response technique, all of the address lines in the bootspace can be analyzed, and faults reported. The algorithm is described later.

At this point, the kernel is completely tested, and any fault that existed should have been indicated to the user.

Operational Enhancements:

Although the above Bootspace Address Line Testing step diagnosis routine produces good results in diagnosing kernel faults, it is not optimum from a test speed standpoint. The single slowest portion of the test, the upper data bus probing, occurs before the address line testing. It would clearly provide a more optimum test if the address line testing could be done before the data bus is probed. However, the address line testing uses Addr__Stim, and Addr__Stim has required that the data bus be tested before it could be used.

What is now recognized to be required is a new test that allows the data bus to be verified, without probing. It is now recognized that the data bus can be diagnosed without probing, for the purpose of simply verifying functionality. With this new test, called "Databus__Ok," tests can be rearranged as follows:

Program enhanced bus test

```
    tests_1_through_5 ()        ! tests 1 through 5 above bus

    if (Databus_Ok() ) then     ! this validates the data bus

        test_addresses ()       ! test 8 above

    else

        test_data_lo ()         ! test 6 above

        test_data_hi ()         ! test 7 above

        end if
end enhanced_bus_test
```

Thus, probing the data lines will only need to be performed if the routine Databus_Ok reports that there is a problem with the Data bus.

Databus Ok

It can be inferred that the data bus is functional without probing since all stuck (tied high or low) and tied (shorted to another line) lines will be discovered by the primitives and resulting signatures. One algorithm that is preferably used commands both Addr_Stim and Cmp_Stim to generate the reset address. It is known from the data stimulus results 5 above that the reset address can be successfully driven from the μP. By examining the address signatures or traces for both Addr_Stim and Cmp_Stim, it can be determined whether they failed. If both Cmp_Stim and Addr_Stim pass, then it can be assumed that the data bus is operational. Since Addr_Stim and Cmp_Stim pass complements of the same address over the same data lines, it is certain that any data lines tied high or low will cause a failure.

Bus Diagnosis Algorithms:

There are two general bus diagnosis algorithms used, namely 1.) non-probing testing and diagnostics and 2.) probing testing and diagnostics.

1.Non-Probing Bus Tests And Diagnostics:

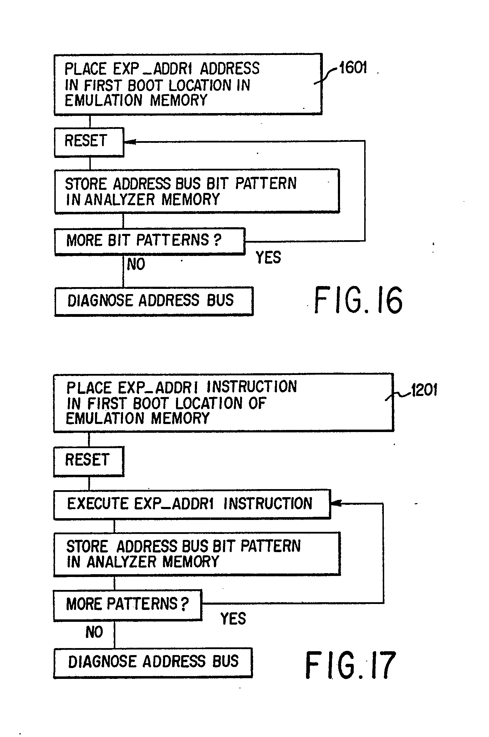

This algorithm, illustrated in figures 13 and 15, is used both for the "Latched Data Lines," and for the bootspace address lines tests.

The following sequence of twelve 32-bit patterns 1301, 1501 is driven out onto the address or data bus. If the data bus is being tested, then Data_Stim is used to drive the patterns. If the address bus is being diagnosed, then Addr_Stim is used. The actual width of the pattern driven depends on the width of the portion of the bus being tested. These patterns guarantee that any line tied high, low, or to any combination of other lines in the bus will be detected. (These patterns are expressed in 32 bit hex numbers, where the least significant bit would map to the least significant bus line)

```
 (1) $FFFFFFFF  ! all bits high
 (2) $FFFF0000  ! pattern of 16 bits high, 16 bits low
 (3) $FF00FF00  ! repeating pattern of 8 bits high, 8 bits low
 (4) $F0F0F0F0  ! repeating pattern of 4 bits high, 4 bits low
 (5) $CCCCCCCC  ! repeating pattern of 2 bits high, 2 bits low
 (6) $AAAAAAAA  ! repeating pattern of 1 bit high, 1 bit low
 (7) $55555555  ! repeating pattern of 1 bit low, 1 bit high
 (8) $33333333  ! repeating pattern of 2 bits low, 2 bits high
 (9) $0F0F0F0F  ! repeating pattern of 4 bits low, 4 bits high
(10) $00FF00FF  ! repeating pattern of 8 bits low, 8 bits high
(11) $0000FFFF  ! pattern of 16 bits low, 16 bits high
(12) $00000000  ! all bits low
```

As each of these patterns is driven out, a corresponding result 1302, 1502 is placed 1303, 1503 in the analyzer RAM 62. Then, the algorithm compares 1304, 1504, on a bit by bit basis, the stimulus vs. the response. If a particular line in all 12 responses was always found high or low, a fault message is generated to indicate that the line is stuck. If a bit in the results was not always high, or low, but differed from the stimulus, then the line corresponding to that bit is said to be "tied." The result of this is that all faults on this bus will be reported, whether a particular line is tied high, low, or to some other line.

2. Probing Bus Tests and Diagnostics:

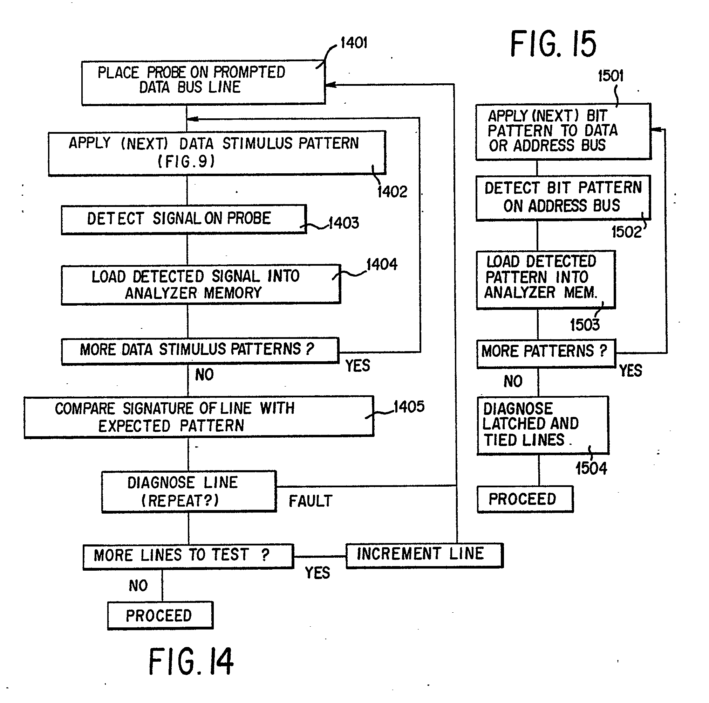

This algorithm, illustrated in figure 14, is used while probing 1401 the untested data lines.
The same sequence of 12 patterns described above are used in this test as well. These patterns are driven out by the Data_Stim routine 1402. The responses are measured 1403 and stored 1404 as cyclic redundancy check signatures (CRC'S) by the single point probe, synchronized to the pod data sync. In this regard, the known correct CRC's are assumed to have been previously calculated for each data line, and embedded in the test program. Also, CRC's are assumed to have been calculated for lines shorted high or low)

The CRC acquired by the probe is then compared 1405 to the known correct CRC for that line, and to the known CRC's for a line stuck high or stuck low.

If the CRC matches any of these three values, the line can be instantly proclaimed good, stuck high, or stuck low. If the CRC is still different, it is accused of being "tied." This algorithm allows a probed line instantly to be accused if bad, without all the other ones in the bus having been probed.

If the UUT has an address bus fault, it is possible that the initial fetch will occur at the wrong address. Therefore the data fetched will not be the pattern specified by the user. The pod checks the address during the reset cycle to ensure that it is correct, and reports an incorrect address by setting the Bad Reset Address flag in the STATUS register.

To use the Data Stimulus primitive, one must first write the desired data pattern to the EXP_DATA special address. Data Stimulus is then invoked by performing a Run UUT at the DATA_STIM special address. When the primitive completes, the pod signals a Breakpoint Reached fault to the mainframe, exactly as is done for Bus Test.

The user can retrieve the results of the Data Stimulus operation by reading and checking the STATUS register, just as is done for Bus Test. The same faults are possible, and the same details can be acquired by reading other special addresses.

If the STATUS register contains zero after a Data Stimulus, the user must not assume that the operation was successful. It is possible that a fault occurred on a data line which was not directly monitored or that the selected sync mode was not appropriate for using the data latch.

Because Data Stimulus operates by fetching a pattern from the ERAM, it can exercise only the portion of the data bus that is driven by the pod's ROM modules. For example, consider a UUT that has a 32-bit processor but which uses only two ROM modules. In this case, Data Stimulus would only be able to test the half of the data bus which was driven by the boot ROM sockets.

The user can determine which data lines are testable on a given UUT by running Data Stimulus, then reading the DATA_MASK register. This register will have "1" bits in the positions corresponding to the testable data lines, and "0" bits elsewhere.

Address Stimulus

The Address Stimulus primitive is designed for stimulating and testing the microprocessor's address bus. It works by loading a very small program into the ERAM, and resetting the UUT to execute the program. The program is microprocessor-specific, and is designed to place a user-specified address on the address bus in the minimum possible number of bus cycles. The structure of the ERAM program for Address Stimulus depends primarily on the microprocessor's behavior after a reset. Some types of processors, such as the Motorola 68000 series and the Zilog Z8000 series, fetch a reset vector from a fixed address. The vector is then loaded into the program counter and execution proceeds from there. This type of processor is referred to as a "vectored-reset" processor.

Other microprocessors simply begin execution at a fixed address after a reset. Processors using this approach include the Intel 8086 family and the Zilog Z-80. Processors of this type are referred to as "execute-on-reset" processors.

For vectored-reset processors, as illustrated in Figure 16, the Address Stimulus ERAM routine typically requires no instructions at all. The desired address is simply placed into ERAM at the reset vector location 1601. When the UUT is reset, the processor fetches its reset vector and attempts to begin executing instructions at the fetched address. The attempted fetch of the initial instruction will cause the desired address to appear on the address bus.

For execute-on-reset processors, as illustrated in Figure 17, Address Stimulus can often be accomplished by one-instruction program. The instruction, placed at the reset address 1701, is a simple load operation with a direct addressing mode. Its address field is filled in by the pod with the user-specified address. When the pod resets the UUT, the processor fetches and executes the load instruction, causing the desired address to be accessed.

The pod generates a sync pulse during the bus cycle of interest. To do this, the pod must know which bus cycle after the reset will contain the specified access. This is determined empirically and is conveyed

15

to the pod via a mainframe setup item.

One important thing to remember about Address Stimulus is that it may not work correctly if there are any data bus faults. Before the processor can reference the desired address, it must first read that address over the data bus. If the information gets corrupted on its way to the processor, then the processor will reference the wrong address. Other less predictable problems can occur if an opcode gets garbled during its trip over the data bus.

Thus, the cardinal rule for using Address Stimulus is that you must first verify the data bus. Normally, Data Stimulus will be used for this purpose before Address Stimulus is attempted.

To use the Address Stimulus primitive, one first writes the desired address pattern to the EXP__ADDR1 special address. At this time, the user should also select the desired sync mode. Address Stimulus is then invoked through a Run UUT at the ADDR__STIM special address. When the operation completes, the pod signals a Breakpoint Reached fault.

The user can retrieve the results of the address stimulus operation by reading and checking the STATUS register. This is done in the same way as for the other bus test primitives.

Address Stimulus is implemented in a processor-specific manner. For some processors, it is not possible to exercise all addresses using this primitive. What is guaranteed for all processors is that Address Stimulus can be used to access all addresses that are used by the ERAM program which implements the standard READ and WRITE operations. Once this portion of the address space has been debugged, READs and WRITEs can be used to test and diagnose the remaining address lines

The user can determine which address lines can be exercised by running Address Stimulus, then reading the ADDR__MASK register. This register will have "1" bits in the positions corresponding to the testable address lines, and "0" bits elsewhere.

In summary, the present invention is directed to a test procedure for use in testing apparatus for testing $\mu$P-based systems and devices. More particularly, the present invention is a hardware implemented procedure exploiting bootstrapping, and moreover, using the simplest available structure and minimum number of signals for error detection. The invention is characterized by the use of primitives and the development of operational signatures to perform go/no go tests and for analysis and diagnosis at high speed and with a high degree of automation. The test procedure, when implemented in a system similar to the memory emulation system, described in the copending application to Scott et al, also provides kernel diagnosis capability at low operational levels of the $\mu$P and inoperative kernels.

Having thus fully described the invention and the preferred embodiment thereof, it will be seen that a test apparatus and method offering significant advantages over prior test devices has been provided by the invention, permitting full testing and fault diagnosis with a high degree of automation and minimal probing of the UUT circuit by the operator.

As many possible embodiments, configurations and variations may be made of the above concepts implemented in this invention without departure from the spirit and scope thereof, it is to be understood that all matters set forth herein or shown in the accompanying drawing are to be interpreted in an illustrative and not a limiting sense.

## Claims

1. A method for testing tee kernel of a microprocessor-based unit under test (UUT) having a microprocessor ($\mu$P), memory and data and address buses comprising the steps of:
electrically substituting an emulation memory for the memory of said UUT,
placing at least one load instruction into an emulation memory,
commanding reset of the UUT $\mu$P,
executing the load instruction to place a predetermined bit pattern on a portion of the address bus,
detecting a bit pattern on a portion of the address bus and
evaluating the bit pattern on the address bus to detect whether there isan error in the performance of the load instruction.

2. A method for testing the kernel of a microprocessor-based unit under test (UUT) having a microprocessor ($\mu$P), memory and data and address buses and a chip select line comprising the steps of:
electrically substituting an emulation memory for the memory of said UUT,
loading one of a sequence of bit patterns into a location of said emulation memory,
commanding reset of the UUT $\mu$P,
generating a sync signal responsive to the reset of the $\mu$P,
detecting a bit pattern on at least one of the data bus and a bit on the chip select line in accordance with the sync pulse and

analyzing a signature of signals on at least one of said chip select line and at least one of the data bus lines caused by the sequence of bit patterns upon repetition of the reset command of the μP to verify or diagnose the functionality of lines of the data bus.

3. A method according to claim 2, wherein

said step of initiating reset is performed a plurality of times corresponding in number to said sequence of bit patterns and wherein

a next one of said sequence of bit patterns is loaded into said location in said emulation memory prior to each performance of said step of initiating reset of said μP.

4. A method for testing the kernel of a microprocessor-based unit under test (UUT) having a microprocessor (μP), memory and data and address buses comprising the steps of:

electricallt substituting an emulation memory for the memory of said UUT,

loading a routine into said emulation memory,

resetting the μP to cause execution of the program,

detecting a bit pattern on the address bus and

evaluating the bit pattern on the address bus relative to the selected bit pattern to diagnose faults in the respective lines of the data bus.

5. A method for testing the kernel of a microprocessor-based unit under test (UUT) having a microprocessor (μP), memory and data and address buses comprising the steps of:

electrically substituting an emulation memory for the memory of said UUT,

loading a selected bit pattern into said emulation memory,

resetting the μP to cause execution of the program,

detecting a bit pattern on the address bus, and evaluating the bit pattern on the address bus relative to the selected bit pattern to diagnose any faults in the respective lines of the data bus.

6. In a method for memory emulation testing of the kernel of a microprocessor-based unit under test (UUT) including a microprocessor, a memory and data and address busses and a chip select line, wherein an emulation memory is substituted for the memory of the UUT, performing a go/no go bus test comprising the steps of:

a. ) exercising the data and address lines sufficiently to detect any existence of stuck or tied lines in the data or address busses,

b. ) upon detection of a said stuck or tied line, overdriving the system reset line of the UUT,

c. ) ascertaining the receipt on said chip select lineof a chip select signal corresponding to a boot memory location for said microprocessor,

d. ) ascertaining the receipt of an address corresponding to said boot memory location,

e. ) initiating a data stimulus primitive characterized by the placement of ones of a sequence of data in a location of said emulation memory corresponding to said boot memory location and storing the sequence of said data retrieved by said microprocessor of said ones of said sequence of data responsive to each of a plurality of resets of said microprocessor, and

f. ) analyzing the pattern resulting from said sequence corresponding to each bit of said stored data to diagnose faults on data lines corresponding to each said bit.

7. A method as recited in claim 6, further including the step of:

g. ) initiating an address stimulus primitive characterized by placing at least a command to place a selected address on the address bus at a location in said emulation memory corresponding to the boot memory location of said microprocessor.

8. A method according to claim 7, wherein said address stimulus primitive is a sequence of selected addresses.

9. A method according to claim 8, including the steps of

h.) storing the sequence of data appearing on the address bus, and

i.) analyzing the pattern resulting from said sequence of data on each line of said address bus.

10. An apparatus for interfacing between a mainframe and a microprocessor-based unit under test (UUT), said UUT having a kernel comprising a microprocessor, a memory and address and data busses, comprising:

an emulation memory connectable to said UUT by substitution for said UUT memory,

means for causing reset of said UUT microprocessor,

means for at least one primitive into said emulation memory under control of said mainframe at a boot address in said emulation memory accessed by the microprocessor of said UUT upon reset of said microprocessor, and

means coupled to said emulation memory to detect accessing by said microprocessor to an address

17

containing at least one bit corresponding to said boot address.

11. An apparatus according to claim 10, wherein said at least one primitive includes a bus test primitive characterized by at least one load instruction, and wherein said means coupled to said emulation memory further includes means for monitoring an address corresponding to said at least one load instruction.

12. An apparatus according to claim 10, wherein said at least one primitive includes a data stimulus primitive characterized by a plurality of data sequentially inserted at said boot address of said emulation memory, each value of said sequence of data being sequentially accessed responsive to a sequence of resets of said UUT microprocessor, each being initiated by said means for causing reset of said UUT microprocessor.

13. An apparatus according to claim 11, wherein said bus test primitive includes a plurality of load instructions, said plurality being substantially less than the number of memory locations accessible in said UUT memory.

14. An apparatus according to claim 13, further including a data stimulus primitive characterized by a plurality of data sequentially inserted at said boot address of said emulation memory, each value of said sequence of data being sequentially accessed responsive to a sequence of resets of said UUT microprocessor, each being initiated by said means for causing reset of said UUT microprocessor.

15. An apparatus according to claim 14, further including an address stimulus primitive characterized by at least a command to place a selected address on the address bus at said boot address and synchronization signal generation means responsive to said UUT microprocessor to develop a signal for evaluation of the appearance of said selected address on said address bus subsequent to said reset.

16. An apparatus according to claim 15 wherein said address stimulus primitive contains addresses corresponding to all addresses of at least a segment of said UUT memory.

17. An apparatus according to claim 16 wherein said microprocessor is of the execute-on-reset type and wherein said boot address is a fixed address.

18. An apparatus according to claim 16 wherein said microprocessor is of the vectored-reset type and said boot address is specified in a fixed address of a boot memory space.

19. A method for interfacing between a mainframe and a microprocessor-based unit under test (UUT), said UUT having a kernel comprising a microprocessor, a memory and address and data busses, comprising the steps of:
connecting an emulation memory to said UUT in substitution for said UUT memory,
causing reset of said UUT microprocessor,
loading at least one primitive into said emulation memory under control of said mainframe at a boot address in said emulation memory accessable by the microprocessor of said UUT upon reset of said microprocessor, and
detecting accessing by said microprocessor of an address containing at least one bit corresponding to said boot address.

20. A method according to claim 19, wherein said at least one primitive includes a bus test primitive characterized by at least one load instruction, and including the further step of detecting an address corresponding to said at least one load instruction.

21. A method according to claim 19, wherein said at least one primitive includes a data stimulus primitive characterized by a plurality of data sequentially inserted at said boot address of said emulation memory, each value of said sequence of data being sequentially accessed responsive to a sequence of resets of said UUT microprocessor.

22. A method according to claim 20, wherein said bus test primitive includes a plurality of load instructions, said plurality being substantially less than the number of memory locations accessible in said UUT memory.

23. A method according to claim 22, further including a data stimulus primitive characterized by a plurality of data sequentially inserted at said boot address of said emulation memory, each value of said sequence of data being sequentially accessed responsive to a sequence of resets of said UUT microprocessor.

24. A method according to claim 23, further including an address stimulus primitive characterized by placing at least a command to place a selected address on the address bus at said boot address and developing a signal, responsive to said UUT microprocessor, for evaluation of the appearance of said selected address on said address bus subsequent to said reset.

25. A method according to claim 24 wherein said address stimulus primitive contains addresses corresponding to all addresses of at least a segment of said UUT memory.

26. In an apparatus for memory emulation testing of a microprocessor-based unit under test (UUT) having a kernel including a microprocessor, a memory and data and address busses, a method of testing

18

said kernel comprising the steps of:

electrically substituting an emulation memory for the memory of said UUT,

commanding a reset of said microprocessor,

executing a bus test primitive including at least one load command performed responsive to said reset,

iteratively executing a data stimulus primitive responsive to repeated further resets of said microprocessor, said data stimulus primitive being characterised by the repetitive placement of a selected data pattern at an address of an emulation memory corresponding to the boot address of the microprocessor, and

executing an address stimulus primitive responsive to a further reset of said microprocessor, said address stimulus primitive being characterized by the placement in said emulation memory of instructions commanding the microprocessor to place digital patterns corresponding to all the addresses of at least a segment of the UUT memory on said address bus.

27. A method for testing the kernel of a microprocessor-based unit under test (UUT) having a microprocessor ($\mu$P), memory and data and address buses comprising the steps of:

placing at least one load instruction into an emulation memory electrically substituted for the memory of said UUT,

initiating reset of the UUT $\mu$P, executing the load instruction to place a predetermined bit pattern on a portion of the address bus,

detecting a bit pattern on a portion of the address bus and

evaluating the bit pattern on the address bus to detect an error in the performance of the load instruction.

FIG. 1

FIG. 2

FIG. 3

FIG. 4

INTERFACE POD
12

64A

KERNEL DATA
CTL
KERNEL ADDRESS

EMULATION
RAM
BANK A
(DUAL PORT)

64

DATA
CTL
ADDRESS MEM
INPUTS

MEMORY
MODULE
CABLE

92

122

EMULATION RAM
BANK SELECT

KERNEL DATA
CTL
KERNEL ADDRESS

EMULATION
RAM
BANK B
(DUAL PORT)

ADDRESS

64B

126

ROM
TYPE
SELECTION
LOGIC

CONTROL

SELECT
SIGNAL

TO OTHER
DEVICES

122
UUT MEMORY INPUTS

MEMORY MODULE
100

102

DATA

SW

114

SOCKET
FOR UUT
MEMORY
CHIP

DATA BUS

112

MEM INPUTS

MEM INPUTS

122

104

122

CABLE TO
MEMORY
SOCKET

92

UUT
14

72

110

UUT
MEMORY
SOCKET

DATA
BUS

ADDRESS
BUS

CHIP SELECT

EP 0 370 929 A2

FIG.5

## FIG.6

1. GENERAL HOUSEKEEPING CHECKS (601)

FAULTS →

2. RESET OVERDRIVE CHECK (602)

3. BUS CYCLE CLOCK CHECK (603)

CLOCK SLOW? (613)
MICROPROCESSOR STUCK?

FORCING LINES ACTIVE ? (623)

4. BOOT ROM CS/OE? (604)

5. CORRECT ROM RESET ADDRESS ? (605)

6. LATCHED LINE TESTING:

BUS TEST (GO / NO GO) (650)

(-OR-)

NO GO

GO

VERIFY (653)
DATABUS_OK

OK

7. PROBED DATA
LINE TESTING (607)

DATA LINE FULL DIAGNOSIS
DATA_STIM (651)

ADDR_STIM
CMP_STIM (654)

8. BOOTSPACE ADDRESS
TEST - ADDR_STIM (608)

REPORT
PAUSE
RETURN

TEST FOR LATCHED
OR TIED LINES (655)

ADDRESS LINE FULL DIAGNOSIS
ADDR_STIM (652)

TO PROBED DATA LINE TESTING 607

TEST COMPLETE (656)

EP 0 370 929 A2

```
t1    1 1 1 1 1 1 1 1 1 1 1 1 1 1 1 1 . . .
t2    1 1 1 1 1 1 1 1 1 1 1 1 1 1 1 1 . . .
t3    1 1 1 1 1 1 1 1 0 0 0 0 0 0 0 0 . . .
t4    1 1 1 1 0 0 0 0 1 1 1 1 0 0 0 0 . . .
t5    1 1 0 0 1 1 0 0 1 1 0 0 1 1 0 0 . . .
t6    1 0 1 0 1 0 1 0 1 0 1 0 1 0 1 0 . . .
t7    0 1 0 1 0 1 0 1 0 1 0 1 0 1 0 1 . . .
t8    0 0 1 1 0 0 1 1 0 0 1 1 0 0 1 1 . . .
t9    0 0 0 0 1 1 1 1 0 0 0 0 1 1 1 1 . . .
t10   0 0 0 0 0 0 0 0 1 1 1 1 1 1 1 1 . . .
t11   0 0 0 0 0 0 0 0 0 0 0 0 0 0 0 0 . . .
t12   0 0 0 0 0 0 0 0 0 0 0 0 0 0 0 0 . . .
```

701 →
702 →

FIG. 7

EP 0 370 929 A2

```
                PLACE BIT PATTERN          801
                IN EMULATION MEMORY

                        │
                     ┌──┴──┐
                     RESET
                     └──┬──┘
        ┌───────────────┤
        │               │
        │      PLACE BIT PATTERN ON DATA    802
        │      AND ADDRESS  BUSES
        │               │
        │               │              803
        │        NON-ZERO ON                ──────┐
        │      CHIP SELECT LINE ?    YES          │
        │                                         │
        │             │NO                         │
        │                              804        │
        │       NEXT BIT PATTERN OF               │
        │       BUS  TEST PRIMITIVE               │
        │               │                         │
        │               │                         │
        │        MORE  BIT PATTERNS ?             │
   YES  └───────────────                          │
                      │NO                         │
                             805                  │
                DATA STIMULUS OR                FAULT
                DATABUS_OK                        │
                        │                         │
                     PROCEED               REPORT  FAULT
```

FIG.8

```
                PLACE BIT PATTERN          901
                IN FIRST LOCATION OF
        ┌──────▶ EMULATION MEMORY
        │       BOOT SPACE
        │               │
        │            ┌──┴──┐
        │            RESET
        │            └──┬──┘
        │               │              902
        │        BIT PATTERN FOUND          NO
        │        ON ADDRESS BUS ?        ──────┐
        │                                      │
        │             │YES                     │
        │                      903             │
        │   YES  MORE BIT PATTERNS ?           │
        └────────                              │
                      │NO                      │
                                             FAULT
                                               │
                    PROCEED             REPORT FAULT
```

FIG.9

```
                                    1001                              1101
┌─────────────────────┐            ┌─────────────────────┐
│ LOAD BIT PATTERNS IN│            │ LOAD BIT PATTERNS IN│
│ EMULATION MEMORY    │            │ EMULATION MEMORY    │
└─────────────────────┘            └─────────────────────┘
                                    1002                              1102
┌─────────────────────┐            ┌─────────────────────┐
│ LOAD READ & WRITE INSTR.│        │ LOAD READ & WRITE INSTR.│
│ IN EMULATION MEMORY │            │ IN EMULATION MEMORY │
└─────────────────────┘            └─────────────────────┘

      ┌─────────┐                        ┌─────────┐
      │  RESET  │                        │  RESET  │
      └─────────┘                        └─────────┘
 1003                                                      1103
┌─────────────────────┐            ┌─────────────────────┐
│ EXECUTE NEXT R/W INSTR.│         │ EXECUTE NEXT READ INSTR.│
└─────────────────────┘            └─────────────────────┘
                                                            1104
┌─────────────────────┐            ┌─────────────────────┐
│ DETECT BIT PATTERN ON│           │ COMPLEMENT PATTERN & WRITE│
│ ADDRESS BUS         │            └─────────────────────┘
└─────────────────────┘                                    1105
          1004                     ┌─────────────────────┐
              1005                 │ DETECT BIT PATTERN ON│
┌─────────────────────┐           │ ADDRESS BUS         │
│ LOAD DETECTED BIT   │           └─────────────────────┘
│ PATTERN IN          │                                    1106
│ ANALYSIS MEMORY     │           ┌─────────────────────┐
└─────────────────────┘           │ LOAD DETECTED BIT PATTERN│
                                   │ ANALYSIS MEMORY     │
                                   └─────────────────────┘

┌─────────────────────┐           ┌─────────────────────┐
│ MORE BIT PATTERNS ? │──YES      │ MORE BIT PATTERNS ? │──YES
└─────────────────────┘           └─────────────────────┘
          NO                                 NO
              1006                                         1107
┌─────────────────────┐           ┌─────────────────────┐
│ ANALYZE SIGNATURES  │           │ ANALYZE SIGNATURES  │
└─────────────────────┘           └─────────────────────┘

┌─────────────────────┐           ┌─────────────────────┐
│ DIAGNOSE BUS FAULTS │           │ DIAGNOSE BUS FAULTS │
└─────────────────────┘           └─────────────────────┘

      ┌─────────┐                        ┌─────────┐
      │ PROCEED │                        │ PROCEED │
      └─────────┘                        └─────────┘
```

# FIG. 10                          FIG. 11

EP 0 370 929 A2

**FIG. 12**

```
PLACE PROBE ON PROMPTED
DATA BUS LINE                    ~1201
        │
        ▼
APPLY (NEXT) DATA STIMULUS PATTERN
        (FIG. 9)                 ~1202
        │
        ▼
DETECT SIGNAL ON PROBE           ~1203
        │
        ▼
LOAD DETECTED SIGNAL INTO        ~1204
ANALYZER MEMORY
        │
        ▼
MORE DATA STIMULUS PATTERNS ?    ──YES
        │ NO
        ▼
COMPARE SIGNATURE OF LINE WITH   ~1205
EXPECTED PATTERN
        │
        ▼
TEST LINE                        ~1206
(RETEST ?)          FAULT
        │
        ▼
MORE LINES TO TEST?    ──YES──  INCREMENT LINE
        │ NO
        ▼
PROCEED
```

**FIG. 13**

```
APPLY (NEXT) BIT        ~1301
PATTERN TO DATA
OR ADDRESS BUS
        │
        ▼
DETECT BIT PATTERN     ~1302
ON ADDRESS BUS
        │
        ▼
LOAD DETECTED          ~1303
PATTERN INTO
ANALYZER MEM.
        │
        ▼
MORE PATTERNS ?    ──YES
        │ NO
        ▼
TEST FOR               ~1304
LATCHED AND
TIED LINES
        │
        ▼
PROCEED
```

FIG. 15

1401

PLACE PROBE ON PROMPTED
DATA BUS LINE

1501

APPLY (NEXT) BIT
PATTERN TO DATA
OR ADDRESS BUS

APPLY (NEXT) DATA STIMULUS PATTERN
(FIG.9)

1402

DETECT BIT PATTERN
ON ADDRESS BUS

1502

DETECT SIGNAL ON PROBE

1403

LOAD DETECTED
PATTERN INTO
ANALYZER MEM.

LOAD DETECTED SIGNAL INTO
ANALYZER MEMORY

1404

1503

MORE DATA STIMULUS PATTERNS ?

YES

MORE PATTERNS ?

YES

NO

NO

COMPARE SIGNATURE OF LINE WITH
EXPECTED PATTERN

1405

DIAGNOSE
LATCHED AND
TIED LINES .

1504

DIAGNOSE LINE
(REPEAT?)

FAULT

PROCEED

MORE LINES TO TEST ?

INCREMENT LINE

YES

NO

PROCEED

FIG. 14

PLACE EXP_ADDR1 ADDRESS IN FIRST BOOT LOCATION IN EMULATION MEMORY ⟋1601

RESET

STORE ADDRESS BUS BIT PATTERN IN ANALYZER MEMORY

MORE BIT PATTERNS ? — YES

NO

DIAGNOSE ADDRESS BUS

FIG. 16

PLACE EXP_ADDR1 INSTRUCTION IN FIRST BOOT LOCATION OF EMULATION MEMORY ⟋1201

RESET

EXECUTE EXP_ADDR1 INSTRUCTION

STORE ADDRESS BUS BIT PATTERN IN ANALYZER MEMORY

MORE PATTERNS ? — YES

NO

DIAGNOSE ADDRESS BUS

FIG. 17